# EUROPÄISCHE PATENTANMELDUNG

(11) **EP 1 097 743 A1**
(43) Veröffentlichungstag der Anmeldung: **09.05.2001**
(21) Anmeldenummer: 00128400.9
(22) Anmeldetag: 02.11.1996
(51) Int. Cl.: B01D 53/94, B01J 23/00, B01J 23/72

(54) **Verwendung eines Spinell-Katalysators zur katalytischen Reduktion von Stickstoffoxiden**

(62) Teilanmeldung aus: 96117578.3
(71) Anmelder: DaimlerChrysler AG, 70567 Stuttgart (DE); BASF AKTIENGESELLSCHAFT, 67056 Ludwigshafen (DE)
(72) Erfinder: Hartweg, Martin, Dr., 89155 Erbach (DE); Seibold, Andrea, 73277 Owen (DE); Walz, Leonhard, Dr., 76437 Rastatt (DE); Fetzer, Thomas, Dr., 67346 Speyer (DE); Morsbach, Bernd, 67069 Ludwigshafen (DE)

(57) **Zusammenfassung**

Die Erfindung betrifft einen Katalysator, ein Verfahren zur Herstellung des Katalysators sowie eine Verwendung des Katalysators. Insbesondere zur katalytischen Reduktion von NOx und zur Oxidation von Kohlenwasserstoffen weist der Katalysator ein Kupferoxid-Kupferoxid-Aluminiumoxid-Spinell auf.

## Beschreibung

Die Erfindung betrifft die Verwendung eines Katalysators, wie er aus der gattungsgemäß zugrundegelegten DE 43 01 470 A1 als bekannt hervorgeht.

Aus der DE 43 01 470 A1 ist ein CuAl₂O₄-Spinell bekannt, das unter Zusatz von Zinn, Blei, einem Element der II. Haupt- oder Nebengruppe des Periodensystems der Element als Oxid oder Salz oder in elementarer Form und anschließendem Calzinieren zu einem Spinell vereinigt wird. Das derart vorbekannte Spinell wird zur Zersetzung von N₂O eingesetzt. Die Verwendung dieses Katalysators hinsichtlich einer katalytischen Oxidation von CO₂ und NOx, insbesondere bei Temperaturen von mehreren 100 °C ist nicht bekannt.

Unter einem Spinell ist eine Zusammensetzung der allgemeinen chemischen Formel AₐB_{b}O₄, zu verstehen, das zumindest mikroskopisch eine kristallographische oder kristallähnliche kubische Gitterstruktur mit flächenzentriert angeordneten Sauerstoffionen und tetraedrischen und oktaedrischen Lücken aufweist. In den tetraedrischen Lücken sind die A-Teilchen und bis zu 50% der B-Teilchen und in den oktaedrischen Lücken die restlichen B-Teilchen angeordnet. Dabei bezeichnet ein A- bzw. B-Teilchen nur deren kristallographische Anordnung. In stofflicher Hinsicht können die A-, wie auch die B-Teilchen unterschiedlich zueinander sein.

Aus Gründen des Umweltschutzes ist die Reinigung von Gasen, insbesondere von Abgasen, wie sie bspw. bei Verbrennungsmotoren und hier vor allem bei Diesel- oder Magermixmotoren anfallen, neben der Verringerung von CO u.a. deren Entstickung, also der Abbau von Stickoxiden (NOx) ein vordringliches Problem.

Aus der EP 042 471 B1 ist ein zur katalytischen Oxidation von Kohlenmonoxid (CO) zu Kohlendioxid (CO2) verwandter Katalysator bekannt, der die Metalle Kupfer (Cu), Zink (Zn) und Aluminium (Al) als Metalloxide aufweist. Zumindest 60% des vorhandenen Cu ist an das Al-Oxid als Kupferoxid-Aluminiumoxid-Spinell gebunden. In den Freiräumen des porösen Spinells ist Zn-Oxid mit einem Gewichtsanteil zwischen 1% bis 20% angeordnet.

Von dem aus der EP 042 471 B1 vorbekannten Katalysator ist allerdings nur seine reinigende Wirkung bzgl. des CO's bekannt, die auf einer katalytischen Oxidation des CO's beruht. Ob der Katalysator gleichfalls zur Reinigung von NOx und/oder Kohlenwasserstoffen aufweisenden Gasen, wie sie insbesondere bei den obengenannten Brennkraftmaschinen und bspw. auch in Verbrennungskraftwerken und dgl. anfallen, geeignet ist, ist nicht bekannt.

Die Aufgabe der Erfindung ist es, den gattungsgemäß zugrundegelegte Katalysator dahingehend weiterzuentwickeln, daß bei einer möglichst guten Stabilität gegenüber den Bestandteilen von Abgasen ist eine gute Reinigungswirkung, insbesondere bei NOx aufweist.

Die Aufgabe wird durch die Verwendung eines Katalysators mit den Merkmalen des Anspruchs 1 gelöst. Durch die Verwendung eines durch das aus der DE 43 01 470 Al bekannte Verfahren hergestellten CU_{A}CU_{B}A1_{C}O₄-Spinells als Katalysator, ist der Katalysator gegenüber den Bestandteilen der Abgase wie bspw. H2O, NOx, CO2 und/oder SO2 weitgehend stabil, wobei er auf Kohlenwasserstoffe und Kohlenmonoxid oxidierend und auf das NOx, insbesondere auf NO und NO₂ katalytisch reduzierend wirkt. Die Reduktion von NOx findet in sauerstoffhaltigem Gas und in Anwesenheit von Reduktionsmitteln, wie z.B. eben genannten Kohlenwasserstoffen statt. Vorteilhafterweise liegen Kohlenwasserstoffe in Abgasen von Verbrennungsmotoren und hierbei insbesondere bei Dieselmotoren in genügender Konzentration vor. Des weiteren hat es sich als günstig erwiesen, diese Spinelle mit katalytisch aktiven Elemente Palladium, Platin, Rhodium, Rutenium, Osmium, Iridium, Rhenium und/oder seltene Erden wie Lantan und Cer, Vanadium, Titan, Niob, Molybdän, Wolfram und/oder deren Salze und/oder deren Oxide zu versehen.

Im Sinne der Erfindung sind als Spinelle auch unterstöchiometrische Verbindungen anzusehen, bei denen das Al₂O₃ als Matrix fungiert und die im Röntgenspektrum die charakterischtischen Spinelllinien aufweisen, wobei der Spinell der formalen Zusammensetzung AAl₂O₄ in einer Al₂O₃ Matrix vorliegt, so daß sich formal eine Stöchiometrie von A(1-x)Al₂O₄ ergibt.

Im übrigen wird die Erfindung anhand eines in der Figur dargestellten Ausführungsbeispieles beschrieben. Dabei zeigt

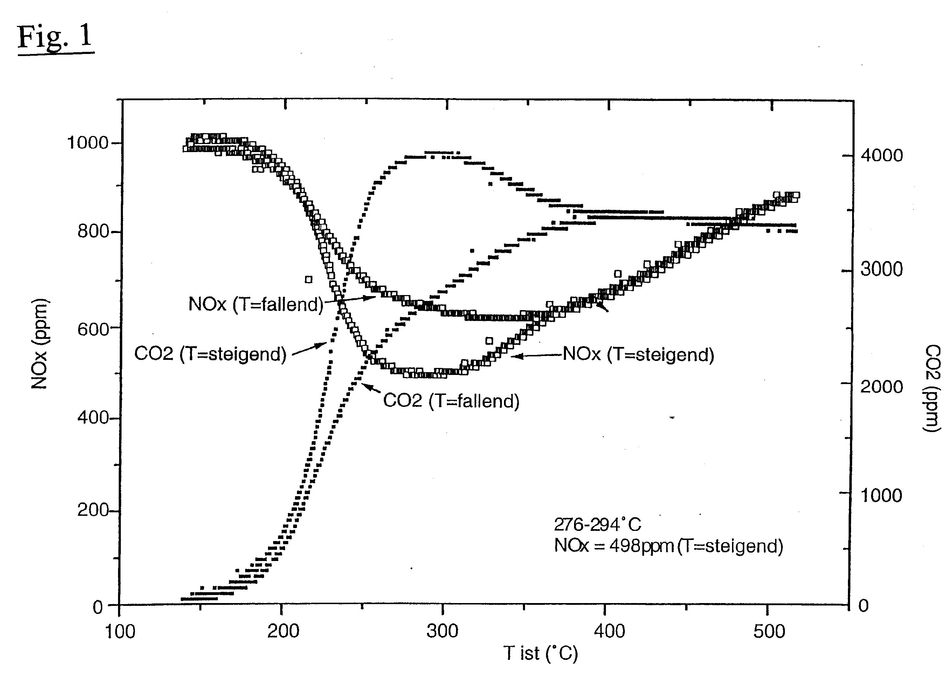

Fig. 1 ein Diagramm einer NOx(NO)-Reduktion und CO-Oxidation über der Temperatur bei einem ein CU_{A}CU_{B}Al₂O₄-Spinell.

### Beispiel 1)

Als Spinell wird ein mit Kupfer imprägnierter Kupfer/Aluminium-Spinell, insbesondere der Zusammensetzung Cu_{0.5}Cu_{0.5}Al₂O₄ verwandt. Die Herstellung des Spinells erfolgt mit einem Verfahren, wie es aus der DE 43 01 4709 A1 bekannt ist. Von dem Spinell werden 6,5 Gramm Split in einem senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wird ein Gasgemisch hindurchgeleitet, das aus 1000 ppm NO, 1000 ppm Propen, 10% Sauerstoff und dem Rest Argon als Trägergas besteht. Hinter dem Reaktor wird die NO-Konzentration mit einem Gasdetektor gemessen, wobei vor der Detektion eventuell gebildetes NO₂ in einem Konverter zu NO reduziert wird. Simultan wird eine Oxidation von Kohlenwasserstoffen zu CO₂ durch Messung des CO₂-Gehaltes durch den Gasdetektor beobachtet. Die Untersuchungen dieses Katalysators ergab wie bei allen erfindungsgemäßen Katalysatoren eine hohe Beständigkeit.

Das Temperaturintervall entspricht in etwa den in einem Abgasstrang eines Auspuffes einer Verbrennungsmaschine, insbesondere einem Dieselmotor auftretenden Temperaturen, wobei bei steigender und bei fallender Temperatur gemessen und eine Hysterese festgestellt wurde.

Der Verlauf des NO-Anteiles in ppm ist als Diagramm in Figur 2 als Funktion der Temperatur dargestellt, wobei sich eine deutliche Abnahme der NO-Konzentration mit zunehmender Temperatur erkennen läßt, die bei ca. 280 °C einen Tiefpunkt erreicht.

Weitere Untersuchungen an diesem Katalysator ergaben auch hier eine hohe Beständigkeit gegenüber NOx, H₂O, CO₂ und H₂O.

## Patentansprüche

1. Verwendung eines Katalysators zur katalytischen Reduktion von Stickoxiden in Abgasen von Verbrennungsmaschinen und/oder Verbrennungskraftwerken, welcher Katalysator ein mit Kupfer imprägnierter Kupferoxid- Aluminiumoxid-Spinell der chemischen Formel
CU_{A}CU_{B}A1₂O₄
ist, wobei gilt:
A + B = 1 und A, B >0.
